# EUROPEAN PATENT SPECIFICATION

(11) **EP 0 917 791 B1**
(45) Date of publication and mention of the grant of the patent: **27.11.2002**
(21) Application number: 97908920.8
(22) Date of filing: 06.03.1997
(51) Int. Cl.: H04L 29/06, H04L 12/403, G06F 12/06, H04L 12/413

(54) **ADDRESS ADMINISTRATION FOR 100BASE-T PHY DEVICES**
ADRESSENVERWALTUNG FÜR 100BASE-T PHYSIKALISCHE SCHICHTEINRICHTUNGEN
ADMINISTRATION DES ADRESSES POUR DISPOSITIFS D'INTERFACE EN COUCHE PHYSIQUE 100 BASE T

(30) Priority: 16.09.1996 US 714558
(43) Date of publication of application: 26.05.1999
(73) Proprietor: ADVANCED MICRO DEVICES INC., Sunnyvale, California 94088-3453 (US)
(72) Inventor: CRAYFORD, Ian, Stephen, San Jose, CA 95129 (US); SIVAKOLUNDU, Ramesh, Fremont, CA 94555 (US)
(74) Representative: Brookes Batchellor
(86) International application number: PCT/US97/03539
(87) International publication number: WO 98/011701

(56) References cited:
- EP-A- 0 404 414
- US-A- 4 360 870
- US-A- 4 373 181

## Description

### BACKGROUND OF THE INVENTION

The present invention relates generally to administration of addresses in a network, and more specifically to dynamic assignment of PHY addresses to multiple managed PHY entities that are managed by a station management entity.

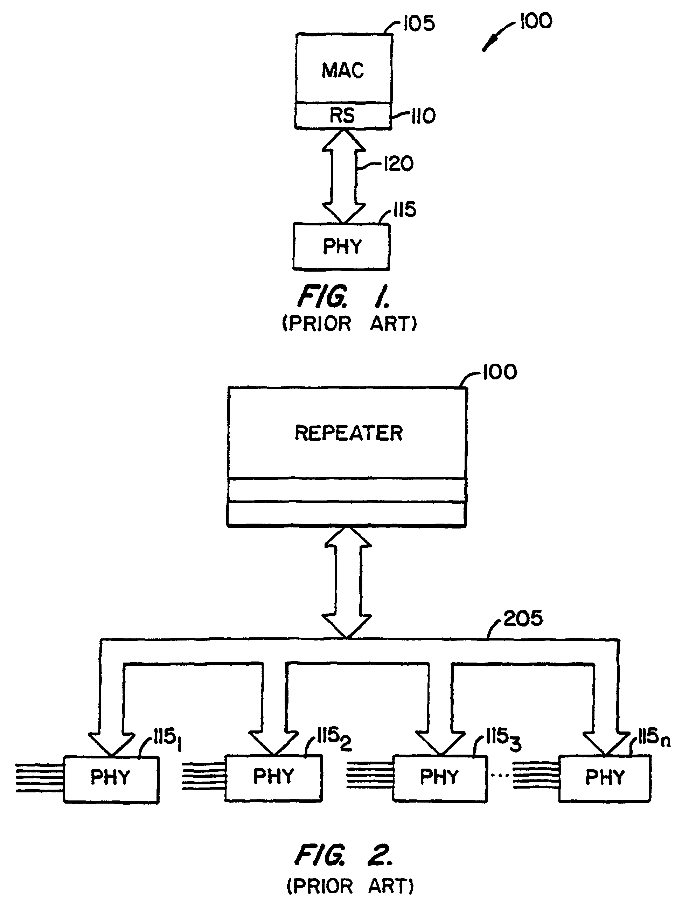

Fig. 1 is a block schematic diagram of a conventional implementation of a station management (STA) entity 100 including medium access control (MAC) sublayer 105 and a reconciliation sublayer (RS) 110. STA 100 is coupled to a physical layer interface (PHY) 115 by a media independent interface (MII) 120. STA 100, PHY 115 and MII 120 operate according to parameters defined in IEEE 802.3u standard, hereby expressly incorporated by reference for all purposes. Clause 22 of the incorporated IEEE 802.3u standard describes MII 120 in an implementation that includes an interface that is a simple two wire, serial interface to connect STA 100 to PHY 115 for the purpose of controlling PHY 115 and gathering status information. MII 120 is an eighteen wire connection, with the two wires relevant for the control and gathering being a management data input/output (MDIO) line and a management data clock (MDC) (neither of which are individually shown in Fig. 1).

In some applications, it is desirable to attach one STA 100 to multiple PHY 115 devices. Fig. 2 is a block schematic diagram of a conventional multi-PHY 115ᵢ arrangement. Each PHY 115 device shown in Fig. 2 has an address to facilitate the control and data gathering functions. In a conventional system, the address of any particular PHY 115ᵢ device is set by appropriate grounding of any of five address pins ADDR₀₋₄. STA 100 is coupled through a bus 205 to each PHY 115ᵢ device. STA 100 coupled to multiple PHY 115 devices must have *a priori* knowledge of the address of each PHY 115 if it is to control it and gather information from it. In these conventional systems requiring such *a* *priori* knowledge, flexibility, costs and efficiency in setting up and testing these systems are not optimal. It is desirable to find an effective solution to improving operation under these conditions so that effective administration of PHY addresses is possible with the attendant advantage of having efficient multi-phy systems.

Before stating a summary of the present invention, acknowledgement is made below of three documents which are concerned with address assignment, not in the network environment discussed above but in the different environment of computer system peripheral devices. These documents show that it is known from this different environment to provide a method for assigning addresses to a number of interface devices by temporarily selecting each said device in turn and issuing an address to that selected device.

US-A-4,373,181 discloses a peripheral device address assignment mechanism which does not require the use of plugboards or jumpers. This mechanism enables a host processor to select any desired peripheral device and set its device address to any desired value at any desired time. This is accomplished by providing each peripheral device control unit with a loadable device address register for holding the device address assigned to its peripheral device. Each device control unit is further provided with circuitry responsive to the appearance of a unique I/O command on the processor I/O bus and to the activation of a unique set of the I/O bus data lines by the processor for loading into its device address register the desired device address value as supplied thereto by the processor via the I/O bus.

EP-A-0,404,414 discloses apparatus for assigning addresses to devices connected to an SCSI bus. A second configure bus interconnects address assignable devices on the SCSI bus. The assignable devices may be used in a mixed system where some devices have fixed non-assignable addresses. The master device in the SCSI bus transmits configuration commands over the configuration bus and addresses for assignment over the SCSI bus. Acknowledgements are received back from a device which has accepted an address. Once configured with an address, the device propagates subsequent configuration commands to an adjacent device.

US-A-4,360,870 discloses a computer system having a CPU connected to I/O devices via a channel and setting addresses into the I/O devices by the CPU. The I/O devices, for purposes of control, are grouped in types. To load device addresses or identifiers, the processor sends a type identifier to the I/O devices. The device having the highest ordered priority of the same type of device and which does not have an assigned identifier responds by inhibiting all lower ordered devices of its type. It is then loaded with its unique assigned identifier which results in the setting of a status latch therein. This setting allows the next lowest ordered device of the same type of devices to then be assigned and loaded with an identifier by the processor. This process continues until all I/O devices of the same type are loaded with identifiers. The process is then repeated for each other type of I/O devices in the system.

According to the present invention there is provided a method for assigning addresses to a number of interface devices by temporarily selecting each said device in turn and issuing an address to that selected device, characterised in that the method includes the steps of:
providing each said device as a physical layer interface device, PHY, coupled to a station management entity in a local area network, each PHY having a single select line input;
selecting a first said PHY by asserting a PHY select control signal derived from the station management entity to said single select line input of only said first PHY; thereafter
transmitting a first management frame on a line coupled from the station management entity to all the PHYs while said PHY select control signal is asserted to only said first PHY, said first management frame including a first PHY address field having a first PHY address; thereafter
associating the first PHY address with the first PHY; thereafter
selecting a second said PHY by asserting said PHY select control signal to said single select line input of only said second PHY; thereafter
transmitting a second management frame on said line coupled from the station management entity to all the PHYs while said PHY select control signal is asserted to only said second PHY, said second management frame including a second PHY address field having a second PHY address different from the first PHY address; and thereafter
associating the second PHY address with the second PHY without changing the first PHY address associated with the first PHY.

In the method of the invention defined above, said PHY select control signal may be asserted to said single select line input of each PHY in turn via an individual select line provided to that PHY from a demultiplexer which is coupled to the station management entity. Alternatively said PHY select control signal may be asserted to said first PHY via a single select line from the station management entity, with said PHY select control signal being asserted to said second PHY via the same single select line and through the first PHY.

Preferred embodiments of the present invention are described, by way of example, in the following detailed description with reference to the accompanying drawings.

### BRIEF DESCRIPTION OF THE DRAWINGS

Fig. 1 is a block schematic diagram of a conventional implementation of a MAC and PHY implementing an embodiment defined in IEEE 802.3u;
Fig. 2 is a block schematic diagram of a conventional multi - PHY arrangement;
Fig. 3 is a block schematic diagram of a preferred embodiment of the present invention; and
Fig. 4 is a block schematic diagram of an alternate preferred embodiment of the present invention.

### DESCRIPTION OF THE PREFERRED EMBODIMENT

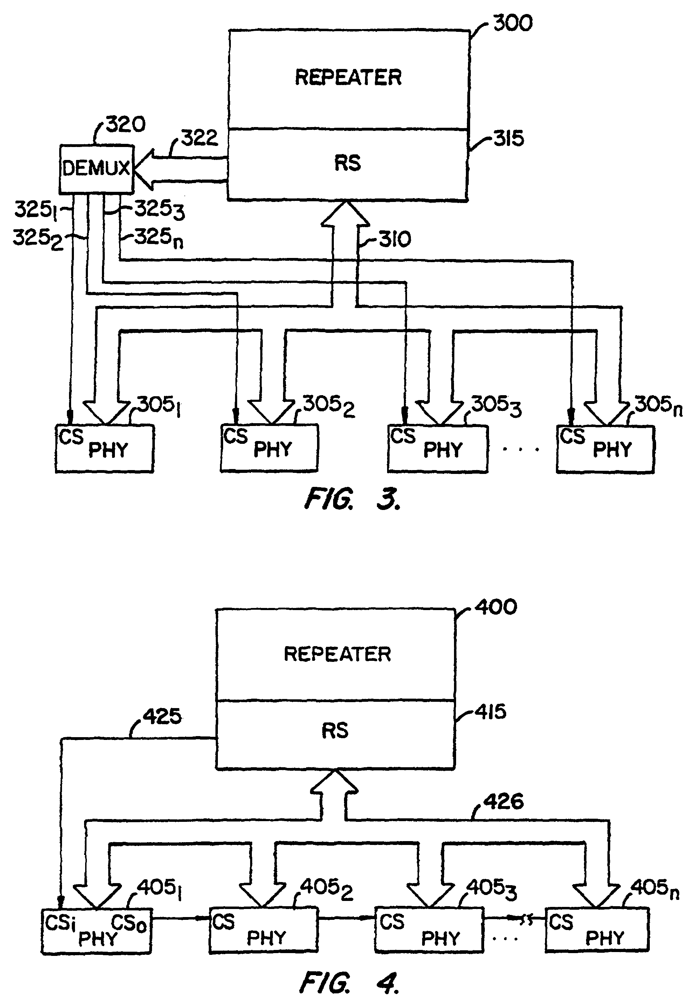

Fig. 3 is a block schematic diagram of a preferred embodiment of the present invention for a station management entity (STA) 300 communicating with a plurality of physical layer devices (PHY) 305ᵢ. A media independent interface (MII) 310 couples STA 300 to each PHY 305, a single bus supporting the control and information functions for STA 300. A reconciliation section (RS) 315, part of STA 300, interfaces to MII 310 and includes the management data input/output (MDIO) line and the management data clock (MDC) (neither of which are individually shown in Fig. 3). Note that while the MDIO and MDC pins of the 802.3u defined MII are assumed present in order to interrogate the PHY devices, the full complement of 802.3u defined MII may not be present, nor may an explicit implementation of the RS, as identified in U.S. application, OPTIMIZED MII 802.3u (100 BASE-T) FAST ETHERNET PHYs. filed September 16, 1996.

Additionally, RS 315 provides a selection address to dumultiplexer 320 via a selective address bus 322. Demultiplexer 320 responds to a selection address on selection address bus 322 to assert one of a plurality of chip select signals on a particular one of a plurality of chip select lines 325ᵢ. The particular one chip select line 325ₓ depends upon the selection address, with the selection signal uniquely identifying a particular one PHY 305ₓ. Each PHY 305 includes a chip select (CS) input port that is coupled to one of the plurality of chip select lines 325.

In operation, upon power-up or reset, STA 300 dynamically assigns PHY addresses to PHY devices 305ᵢ. STA 300 asserts a first selection address signal to demultiplexer 320. Demultiplexer 320 asserts a first chip selection signal on chip selection line 325₁ to a first PHY device 305₁. STA 300, using RS 315, transmits an information packet to all PHY devices 305ᵢ. This information packet includes a PHY address field containing the address to be assigned to first PHY device 305₁. Only first PHY device 305₁, the particular one PHY device 305 having the first selection signal asserted at a CS input port, responds to the concurrent assertion of the selection signal and a first specific address in the PHY address field, to store the first specific address in a memory (e.g., buffer or register (not shown)) associated with first PHY device 305₁. First PHY device 305₁ thereafter responds to management or control packets addressed using the first specific address.

Subsequently, STA 300 dynamically assigns addresses to the other PHY devices 305 by selectively activating individual ones of the selection signals to PHY devices and by driving an address appropriate for the chip selection signal driven by demultiplexer 320. STA 300 thereby dynamically assigns addresses to all PHY devices 305.

Depending upon particular implementations of STA 300 and PHY devices 305, the actual mechanism of sending the address will vary. In the preferred embodiment of the present invention, MII 310 sends the information, specifically the MDIO line carries the management frame having the PHY address field. STA 300 asserts the CS signal to the particular PHY device 305 to be addressed and then transmits the management frame that conforms to the incorporated IEEE Standard. The proposed IEEE Standard 802.3u provides for a format for a management frame defined in Table I below.

**TABLE I**

| | PRE | ST | OP | PHYAD | REGADD | TA | DATA | IDLE |
|---|---|---|---|---|---|---|---|---|
| READ | 1...1 | 01 | 10 | AAAAA | RRRRR | Z0 | D...D | Z |
| WRITE | 1...1 | 01 | 01 | AAAAA | RRRRR | 10 | D...D | Z |

PHYAD is a five bit PHY address that is used to uniquely identify up to thirty-two different PHY devices. In the preferred embodiment, a particular PHY device having a selection signal asserted at its CS input that receives a management frame with a PHY address in the PHYAD field uses the PHY address as its own address. In other applications, other mechanisms using the CS input may be used to dynamically assign the particular PHY with the PHY address. One alternative provides for putting the PHY address in the DATA field, for example.

Fig. 4 is a block schematic diagram of an alternate preferred embodiment of the present invention for a STA 400 that dynamically assigns PHY addresses to a plurality of PHY devices 405ᵢ. STA 400, through RS 415, couples a first chip selection line to a CS input (CSᵢ) of a first PHY device 405₁. First PHY device 405₁ also includes a CS output port (CSₒ). The remainder of the plurality of PHY devices 405ᵢ are serially coupled together, with a CSₒ of one PHY device 405ₖ being coupled to a CSᵢ of a subsequent PHY device 405ₖ₊₁. In a preferred embodiment, first PHY device 405₁ is the only PHY device 405 coupled directly to STA 400 via CS line 425. An additional pin acts as a serial extension to the next in series PHY device 405 to produce a daisy chain of PHY devices that are interconnected on the bidirectional MDIO line 426. Each PHY device 405 powers up with an internal connection between its CSᵢ port and its CSₒ port open.

In operation (after power up), STA 400 transmits a special management frame containing a PHY address over MDIO line 415 to only first PHY device 405₁. First PHY device 405₁ extracts the PHYAD from the special management frame and uses the PHYAD as its address. Thereafter, first PHY device 405₁ closes the connection between CSᵢ and CSₒ. A second special management frame transmitted from STA 300 to CSᵢ of first PHY device 405₁ is ignored by first PHY device 405₁ and passed to a second PHY device 405₂ via the serial connection between CSₒ of first PHY device 405₁ and CSᵢ of second PHY device 405₂. Second PHY device 405₂ responds to this second special management frame by extracting the PHYADD from the special management frame and using it as the address for second PHY device 405₂. Thereafter, second PHY device 405₂ closes its internal connection between its CSᵢ and its CSₒ. A third special management frame then is transmitted by STA 400 through first PHY device 405₁ and through second PHY device 405₂ to a third PHY device 405₃. Third PHY device 405₃ extracts the PHYADD and assigns the PHYADD as its own address. The procedure continues until all of the plurality of PHY devices have been assigned an address.

In other embodiments, it is possible to address any noise robustness concerns by having a second type of special management frame that reads a programmed PHY address so that the read address can be compared to the desired address before programming another. PHY devices 405 could also be programmed to automatically return the programmed address in response to any special management frame that programs an address.

Still other alternative provides for special management frames (or duplicated special management frames) to explicitly command a particular PHY device 405 to close the connection between its CSᵢ and CSₒ ports. This alternative embodiment helps to ensure that each programmed PHY device 405 has a unique address.

In conclusion, the present invention provides a simple, efficient solution to a problem of dynamically assigning unique addresses to multiple PHY devices connected to a single management master. While the above is a complete description of the preferred embodiments of the invention, various alternatives, modifications, and equivalents may be used. Therefore, the above description should not be taken as limiting the scope of the invention which is defined by the appended claims.

## Claims

1. A method for assigning addresses to a number of interface devices by temporarily selecting each said device in turn and issuing an address to that selected device, **characterised in that** the method includes the steps of:
providing each said device as a physical layer interface device, PHY (305₁ -305ₙ, 405₁ - 405ₙ), coupled (310,426) to a station management entity (300,400) in a local area network, each PHY having a single select line input (CS, CSᵢ);
selecting a first said PHY (305₁, 405₁) by asserting a PHY select control signal derived from the station management entity to said single select line input of only said first PHY; thereafter
transmitting a first management frame on a line (MDIO) coupled from the station management entity to all the PHYs while said PHY select control signal is asserted to only said first PHY, said first management frame including a first PHY address field having a first PHY address; thereafter
associating the first PHY address with the first PHY; thereafter
selecting a second said PHY (305₂, 405₂) by asserting said PHY select control signal to said single select line input of only said second PHY; thereafter
transmitting a second management frame on said line (MDIO) coupled from the station management entity to all the PHYs while said PHY select control signal is asserted to only said second PHY, said second management frame including a second PHY address field having a second PHY address different from the first PHY address; and thereafter
associating the second PHY address with the second PHY without changing the first PHY address associated with the first PHY.

2. The method of claim 1 wherein said PHY select control signal is asserted to said single select line input of each PHY (305₁ - 305ₙ) in turn via an individual select line (325₁ - 325ₙ) provided to that PHY from a demultiplexer (320) which is coupled to the station management entity (300).

3. The method of claim 1 wherein said PHY select control signal is asserted to said first PHY (405₁) via a single select line (425) from the station management entity, and wherein said PHY select control signal is asserted to said second PHY (405₂) via the same single select line (425) and through the first PHY (405₁).

4. The method of claim 3 wherein said step of associating the first PHY address with the first PHY includes programming the first PHY with the first PHY address, then verifying the first PHY if programmed with the first PHY address, then the step of enabling subsequent assertion of the PHY select control signal through the first PHY.

5. The method of claim 3 wherein said step of associating the first PHY address with the first PHY includes programming the first PHY with the first PHY address and, upon programming the first PHY, automatically enabling subsequent assertion of the PHY select control signal through the first PHY.

6. The method of claim 4 wherein said enabling step is automatically performed upon verification of the first PHY address with the first PHY.

7. The method of claim 4 wherein said enabling step is responsive to receipt of a control management frame addressed to the first PHY.

8. The method of any preceding claim wherein said associating step comprises the step of storing the PHY address in a PHY address register coupled to the PHY.

9. The method of any preceding claim wherein said transmitting step comprises the step of:
forming said management frame to be compliant to a standard management frame format having a plurality of management frame fields, said management frame using one of said plurality of management frame fields as said PHY address field.

10. The method of claim 9 wherein said plurality of frames includes a PHYAD field and said forming step provides the PHY address in said PHYAD field.

11. The method of claim 9 wherein said plurality of frames includes a DATA field and said forming step provides the PHY address in said DATA field.

12. The method of any preceding claim wherein a multi-PHY integrated circuit includes at least said first PHY and said second PHY.

## Patentansprüche

1. Verfahren zum Zuweisen von Adressen an eine Anzahl von Interfacevorrichtungen durch vorübergehendes Auswählen jeder der Vorrichtungen für sich und durch Ausgeben einer Adresse an die ausgewählte Vorrichtung, **dadurch gekennzeichnet, daß** das Verfahren die folgenden Schritte aufweist:
- Vorsehen jeder der Vorrichtungen als eine Interfacevorrichtung der physischen Schicht PHY (305₁-305ₙ, 405₁-405ₙ), die mit einer Stationsmanagementeinheit (300,400) in einem lokalen Netzwerk gekoppelt (310,426) ist, wobei jede PHY einen Einzel-Wahlleitungseingang (CS, CSᵢ) aufweist;
- Wählen einer ersten PHY (305₁, 405₁) durch Senden eines PHY-Wählsteuersignals, das von der Stationsmanagementeinheit abgeleitet ist, an den Einzel-Wahlleitungseingang nur der ersten PHY; anschließend
- Übertragen eines ersten Management-Datenblocks auf einer Leitung (MDIO), welche die Stationsmanagementeinheit mit sämtlichen PHY verbindet, wobei das PHY-Wählsteuersignal nur an die erste PHY gesendet wird, wobei der erste Management-Datenblock ein erstes PHY-Adressenfeld mit einer ersten PHY-Adresse aufweist; anschließend
- Zuordnen der ersten PHY-Adresse zur ersten PHY; anschließend
- Wählen einer zweiten PHY (305₂, 405₂) durch Senden des PHY-Wählsteuersignals an den Einzel-Wahlleitungseingang nur der zweiten PHY; anschließend
- Übertragen eines zweiten Management-Datenblocks auf der Leitung (MDIO), welche die Stationsmanagementeinheit mit sämtlichen PHY verbindet, wobei das PHY-Wählsteuersignal nur an die zweite PHY gesendet wird, wobei der zweite Management-Datenblock ein zweites PHY-Adressenfeld mit einer zweiten PHY-Adresse aufweist, die von der ersten PHY-Adresse verschieden ist; und anschließend
- Zuordnen der zweiten PHY-Adresse zur zweiten PHY ohne Verändern der der ersten PHY zugeordneten PHY-Adresse.

2. Verfahren nach Anspruch 1, bei dem das PHY-Wählsteuersignal an den Einzel-Wahlleitungseingang jeder PHY (305₁-305ₙ) über eine individuelle Wahlleitung (325₁-325ₙ) zwischen der betreffenden PHY und einem Demultiplexer (320) gesendet wird, der mit der Stationsmanagementeinheit (300) verbunden ist.

3. Verfahren nach Anspruch 1, bei dem das PHY-Wählsteuersignal an die erste PHY (405₁) über eine Einzel-Wählleitung (425) von der Stationsmanagementeinheit gesendet wird, und bei dem das PHY-Wählsteuersignal an die zweite PHY (405₂) über die selbe Einzel-Wählleitung (425) und durch die erste PHY (405₁) gesendet wird.

4. Verfahren nach Anspruch 3, bei dem der Schritt des Zuordnes der ersten PHY-Adresse zur ersten PHY das Programmieren der ersten PHY mit der ersten PHY-Adresse, das anschließende Prüfen der ersten PHY, wenn diese mit der ersten PHY-Adresse programmiert ist, und das anschließende Freigeben des nachfolgenden Sendens des PHY-Wählsteuersignals über die erste PHY umfaßt.

5. Verfahren nach Anspruch 3, bei dem der Schritt des Zuordnens der ersten PHY-Adresse zur ersten PHY das Programmieren der ersten PHY mit der ersten PHY-Adresse und, beim Programmieren der ersten PHY, das automatische Freigeben des nachfolgenden Sendens des PHY-Wähisteuersignals über die erste PHY umfaßt.

6. Verfahren nach Anspruch 4, bei dem der Freigabeschritt beim Prüfen der ersten PHY-Adresse mit der ersten PHY automatisch erfolgt.

7. Verfahren nach Anspruch 4, bei dem der Freigabeschritt auf den Empfang eines an die erste PHY adressierten Steuermanagement-Datenblocks reagiert.

8. Verfahren nach einem der vorhergehenden Ansprüche, bei dem der Zuordnungsschritt den Schritt des Speicherns der PHY-Adresse in einem mit der PHY verbundenen PHY-Adressenregister umfaßt.

9. Verfahren nach einem der vorhergehenden Ansprüche, bei dem der Sendeschritt den folgenden Schritt umfaßt:
- Bilden des Management-Datenblocks entsprechend einem Standard-Management-Datenblockformat mit mehreren Management-Datenblockfeldern, wobei der Management-Datenblock eines der mehreren Management-Datenblockfelder als das PHY-Adressenfeld verwendet.

10. Verfahren nach Anspruch 9, bei dem die mehreren Datenblöcke ein PHYAD-Feld aufweisen und der Schritt des Bildens die PHY-Adresse in dem PHYAD-Feld erzeugt.

11. Verfahren nach Anspruch 9, bei dem die mehreren Datenblöcke ein DATA-Feld umfassen und der Schritt des Bildens die PHY-Adresse im DATA-Feld erzeugt.

12. Verfahren nach einem der vorhergehenden Ansprüche, bei dem eine Multi-PHY-IC-Schaltung wenigstens die erste PHY und die zweite PHY umfaßt.

## Revendications

1. Méthode d'assignation d'adresses à un certain nombre d'interfaces en sélectionnant temporairement chacune desdites interfaces l'une après l'autre et en attribuant une adresse à l'interface sélectionnée, **caractérisée en ce que** la méthode comprend les étapes consistant à :
fournir chacune desdites interfaces comme une interface d'une couche physique, PHY (305₁-305ₙ,405₁-405ₙ), couplée (310,426) à une entité de gestion de station (300,400) dans un réseau local, chaque PHY, possédant une entrée de ligne de sélection unique (CS, CSᵢ) ;
sélectionner une première PHY (305₁,405₁) en transmettant un signal de contrôle de sélection PHY dérivé de l'entité de gestion de station à la dite entrée de ligne de sélection unique de ladite première PHY uniquement ; ensuite
transmettre une première trame de gestion sur une ligne (MDIO) couplée à partir de l'entité de gestion de station à toutes les PHY alors que ledit signal de contrôle de sélection PHY est transmis à ladite première PHY uniquement, ladite première trame de gestion comprenant un premier champ d'adresse PHY possédant une première adresse PHY ; ensuite
associer la première adresse PHY avec la première PHY ; ensuite
sélectionner une seconde PHY (305₂, 405₂) en transmettant ledit signal de contrôle de sélection PHY à ladite entrée de ligne de sélection unique de ladite seconde PHY uniquement ; ensuite
transmettre une seconde trame de gestion sur ladite ligne (MDIO) couplée à partir de l'entité de gestion de station à toutes les PHY alors que ledit signal de contrôle de sélection PHY est transmis à ladite seconde PHY uniquement, ladite seconde trame de gestion comprenant un second champ d'adresse PHY possédant une seconde adresse PHY différente de la première adresse PHY ; et ensuite
associer la seconde adresse PHY à la seconde PHY sans changer la première adresse PHY associée à la première PHY.

2. Méthode selon la revendication 1 dans laquelle ledit signal de contrôle de sélection PHY est transmis à ladite entrée de ligne de sélection unique de chaque PHY (305₁-305ₙ) l'une après l'autre via une ligne de sélection individuelle (325₁-325ₙ) fournie à cette PHY à partir d'un démultiplexeur (320) qui est couplé à l'entité de gestion de station (300).

3. Méthode selon la revendication 1 dans laquelle ledit signal de contrôle de sélection PHY est transmis à ladite première PHY (405₁) via une ligne de sélection unique (425) à partir de l'entité de gestion de station, et dans laquelle ledit signal de contrôle de sélection PHY est transmis à ladite seconde PHY (405₂) via la même ligne de sélection unique (425) et à travers la première PHY (405₁).

4. Méthode selon la revendication 3 dans laquelle ladite étape consistant à associer la première adresse PHY à la première PHY comprend la programmation de la première PHY avec la première adresse PHY, suivie de la vérification de la première PHY si elle a été programmée avec la première adresse PHY, et ensuite l'étape consistant à activer la transmission subséquente du signal de contrôle de sélection PHY à travers la première PHY.

5. Méthode selon la revendication 3 dans laquelle ladite étape consistant à associer la première adresse PHY à la première PHY comprend la programmation de la première PHY avec la première adresse PHY, et après la programmation de la première PHY, l'activation automatique de la transmission subséquente du signal de contrôle de sélection PHY à travers la première PHY.

6. Méthode selon la revendication 4 dans laquelle ladite étape d'activation est effectuée automatiquement après la vérification de la première adresse PHY avec la première PHY.

7. Méthode selon la revendication 4 dans laquelle ladite étape d'activation réagit à la réception d'une trame de gestion de contrôle adressée à la première PHY.

8. Méthode selon l'une quelconque des revendications précédentes dans laquelle ladite étape d'association comprend l'étape de mise en mémoire de l'adresse PHY dans un registre d'adresses PHY couplé à la PHY.

9. Méthode selon l'une quelconque des revendications précédentes dans laquelle ladite étape de transmission comprend les étapes consistant à :
constituer ladite trame de gestion de façon à ce qu'elle soit compatible avec un format de trame de gestion standard possédant un ensemble de champs de trame de gestion, ladite trame de gestion utilisant un des champs dudit ensemble des champs de trame de gestion comme dit champ d'adresse PHY.

10. Méthode selon la revendication 9 dans laquelle ledit ensemble de trames comprend un champ PHYAD et ladite étape de constitution fournit l'adresse PHY dans ledit champ PHYAD.

11. Méthode selon la revendication 9 dans laquelle ledit ensemble de trames comprend un champ DATA et ladite étape de constitution fournit l'adresse PHY dans ledit champ DATA.

12. Méthode selon l'une quelconque des revendications précédentes dans laquelle un circuit intégré multi-PHY comprend au moins ladite première PHY et ladite seconde PHY.
